# EUROPEAN PATENT APPLICATION

(11) **EP 4 535 302 A1**
(43) Date of publication of application: **09.04.2025**
(21) Application number: 24200776.3
(22) Date of filing: 17.09.2024
(51) Int. Cl.: G06V 20/52, G07G 3/00, G08B 13/196

(54) **SYSTEM AND ITEM REGISTRATION MONITORING METHOD**

(30) Priority: 27.09.2023 JP 2023166044
(71) Applicant: Glory Ltd., Himeji-shi, Hyogo 670-8567 (JP)
(72) Inventor: KOUNO, Isamu, Hyogo, 6708567 (JP)
(74) Representative: SSM Sandmair

(57) **Abstract**

A system includes predetermined item detection circuitry 112 configured to detect the presence of a predetermined item other than items that are put in a shopping basket provided in a store; action detection circuitry 113 configured to detect a predetermined item registration action, using an image taken of item registration work by a registering person who is registering items; and output circuitry 114 configured to output an alert if the presence of the predetermined item is detected by the predetermined item detection circuitry 112 but no predetermined item registration action for the predetermined item is detected by the action detection circuitry 113.

## Description

### BACKGROUND

### Technical Field

The present disclosure relates to a system and an item registration monitoring method.

### Related Art

Techniques have been proposed that allows self-checkout systems for automatically processing checkout transactions to complete such transactions without problems even when items to be purchased include those that are too large to fit in a shopping basket.

For example, a checkout machine disclosed in JP2021-105936A includes a large item detection unit to detect a large item that is too large to fit in a container and an alert output unit to output an alert upon detection of the large item.

The system disclosed in JP2021-105936A is designed to prevent customers from failing to register large items that are too large to fit in the shopping basket, and does not contemplate preventing them from failing to register other items, such as those that are not large but are placed on a lower tier of a cart or those held by them.

It is an object of the present disclosure to provide a system that reliably prevents customers from failing to register items.

### SUMMARY

A first aspect of the present disclosure relates to a system including: a first detector configured to detect a presence of a predetermined item other than items that are put in a container provided in a store; a second detector configured to detect a predetermined item registration action, using an image taken of item registration work by a registering person who is registering items; and an outputter configured to output an alert if the presence of the predetermined item is detected by the first detector but the predetermined item registration action for the predetermined item is not detected by the second detector.

In some embodiments, the first detector may be configured to detect the presence of the predetermined item using an image taken of the registering person.

In some embodiments, the first detector may be configured to detect the presence of the predetermined item if the presence of the predetermined item is indicated by the registering person.

In some embodiments, the predetermined item may be an item placed on a lower tier of a cart carrying the container.

In some embodiments, the predetermined item may be an item held by the registering person.

In some embodiments, the second detector may be configured to detect the predetermined item registration action based on a skeletal recognition process on the registering person.

In some embodiments, the outputter may be configured to output the alert in response to the registering person declaring that the registering person has completed the item registration work.

In some embodiments, the system may further include a third detector configured to detect ejection of a receipt and a fourth detector configured to detect departure of the registering person from a checkout device that processes checkout, and the outputter may be configured to output the alert if the ejection of the receipt is not detected by the third detector by the time when the fourth detector detects the departure of the registering person.

Another aspect of the present disclosure relates to a system including: a first detector configured to detect a presence of a plurality of containers provided in a store; a second detector configured to detect a predetermined item registration action, using an image taken of item registration work by a registering person who is registering items; and an outputter configured to output an alert if the presence of the plurality of containers is detected by the first detector but the predetermined item registration action for the plurality of containers is not detected by the second detector.

Still another aspect of the present disclosure relates to an item registration monitoring method including: detecting a presence of a predetermined item other than items that are put in a container provided in a store; detecting a predetermined item registration action, using an image taken of item registration work by a registering person who is registering items; and outputting an alert if the presence of the predetermined item is detected but the predetermined item registration action for the predetermined item is not detected.

Embodiments of the present disclosure can provide a system that reliably prevents customers from failing to register items.

### BRIEF DESCRIPTION OF THE DRAWINGS

Exemplary embodiments of the present disclosure will be described in detail based on the following figures, wherein:
FIG. 1 illustrates an example schematic configuration of a checkout system according to a first embodiment;
FIG. 2 illustrates an example schematic configuration of a checkout device according to the first embodiment;
FIG. 3 is a block diagram illustrating an example functional configuration of the checkout device according to the first embodiment;
FIG. 4 illustrates an example checkout start screen displayed on an operational display;
FIG. 5 illustrates an example selection screen displayed on the operational display;
FIG. 6 illustrates an example request screen displayed on the operational display;
FIG. 7 illustrates an example item list screen displayed on the operational display;
FIG. 8 illustrates an example schematic configuration of a server according to the first embodiment;
FIG. 9 is a flowchart illustrating an example monitoring process performed by control circuitry;
FIG. 10 is a flowchart illustrating an example monitoring process performed by control circuitry according to a second embodiment;
FIG. 11 illustrates an example schematic configuration of a system according to a third embodiment;
FIG. 12 schematically illustrates an example situation where a waiting customer is pushing a cart;
FIG. 13 is a flowchart illustrating an example monitoring process performed by control circuitry;
FIG. 14 illustrates an example schematic configuration of a system according to a fourth embodiment; and
FIG. 15 illustrates an example schematic configuration of a system according to a fifth embodiment.

### DETAILED DESCRIPTION

Exemplary embodiments of the present disclosure are detailed below with reference to the appended drawings.

### First Embodiment

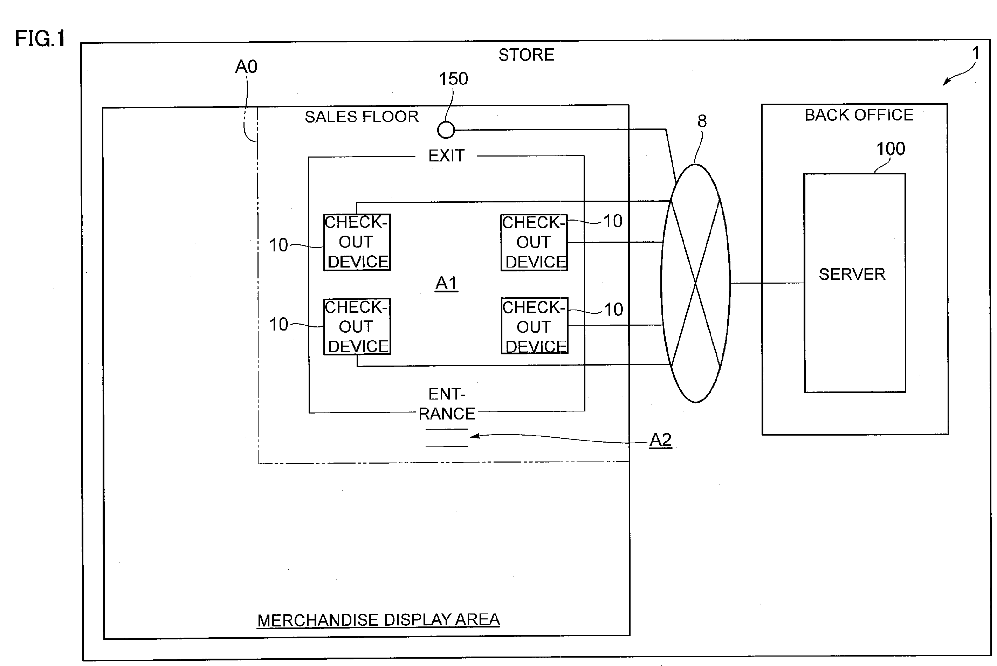

FIG. 1 illustrates an example schematic configuration of a checkout system 1 (which may be referred to hereinafter simply as a "system 1") according to a first embodiment.

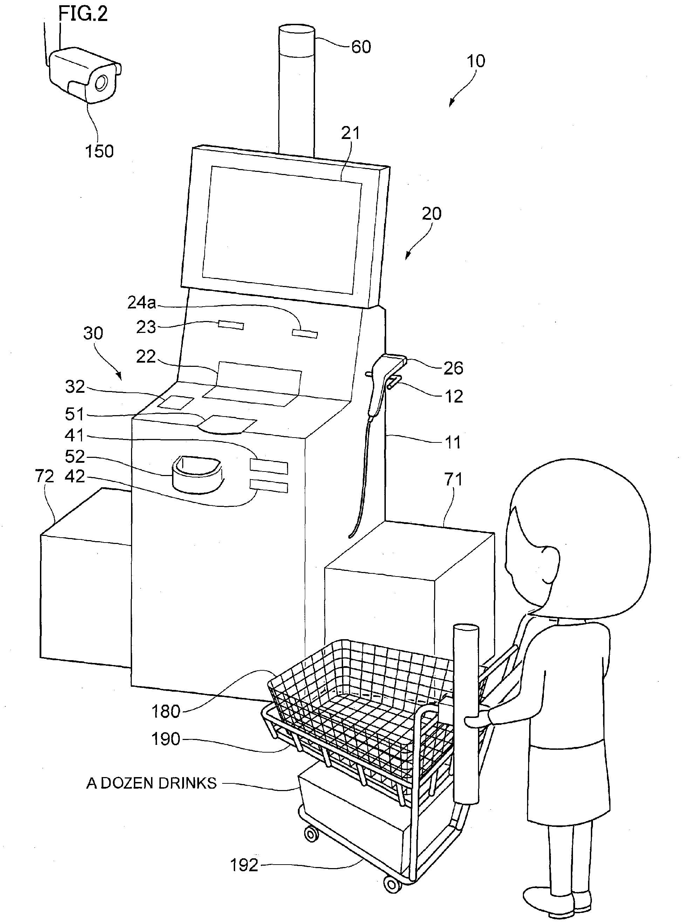

FIG. 2 illustrates an example schematic configuration of a checkout device 10 according to the first embodiment.

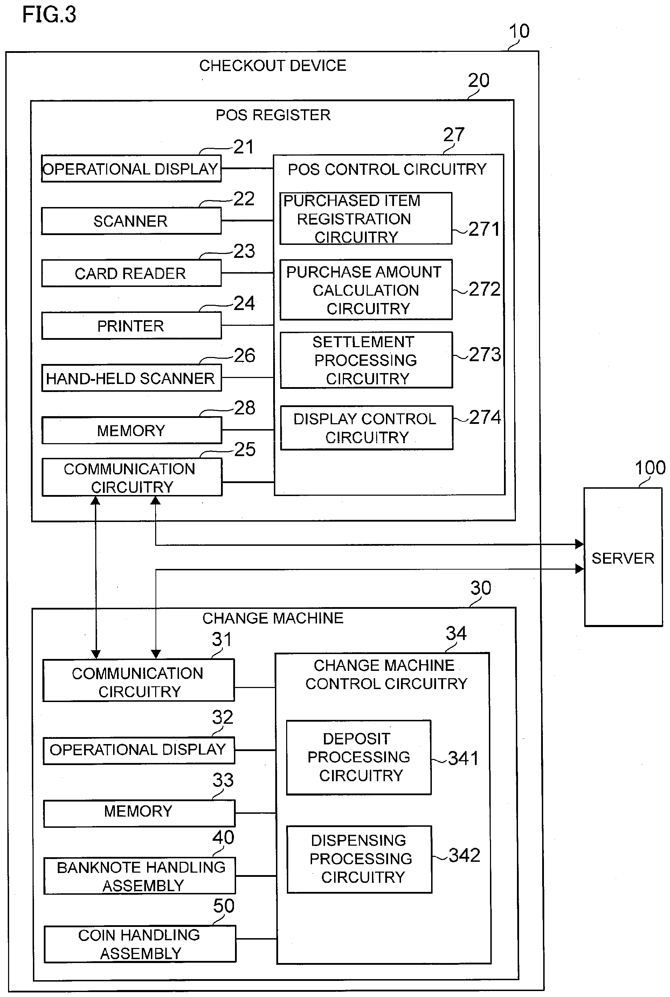

FIG. 3 is a block diagram illustrating an example functional configuration of the checkout device 10 according to the first embodiment.

The system 1 includes checkout devices 10 for self-checkout used by customers to register items and check out by themselves and a server 100 capable of communicating with the checkout devices 10 via a network 8. FIG. 1 shows an example where four checkout devices 10 are installed in a checkout area A1, which is located in the sales floor of a store such as a supermarket and next to a merchandise display area, and the server 100 is installed in a back office area.

The system 1 also includes a camera 150 that is connected to the server 100 via the network 8 and captures a predetermined area A0 in the store, including the checkout area A1. The camera 150 is installed on e.g., the ceiling and has a wide-angle lens so that a wide area can be captured at once. The predetermined area A0 also includes a waiting area A2 where customers wait before entering the checkout area A1.

The network 8 may be any communication network used for data communication between devices and may be e.g., a local area network (LAN). The communication lines used for data communication may be either or both wired and wireless. Examples of wireless LANs include WiFi^{®} and Bluetooth^{®}.

The system 1 prevents customers from failing to register predetermined items, which are items other than those put in a shopping basket 180. The shopping basket 180 is a container provided in the store to put in items to be purchased. Examples of the predetermined items include those placed on a lower tier 192 of a cart 190 on which the shopping basket 180 is placed and those held by customers. Examples of items placed on the lower tier 192 of the cart 190 include rice, a dozen drinks, toilet paper, etc. Examples of items held by customers include a rolled-up rug, such as a mat e.g., a rush mat. In other words, the predetermined items may be items that are difficult to put in the shopping basket 180, for example.

The checkout device 10 and the server 100 are now detailed.

### (Checkout Device 10)

The checkout device 10 includes a POS register 20 for registering items, a change machine 30 for depositing and dispensing money, a light 60 for calling a clerk, an unregistered item table 71 for placing unregistered items, and a registered item table 72 for placing registered items. The POS register 20 and the change machine 30 are detailed below. The light 60 includes a light-emitting diode (LED) and lights up or blinks by having the LED emit light.

### (POS Register 20)

The POS register 20 includes an operational display 21, a scanner 22, a card reader 23, a printer 24, communication circuitry 25, and a hand-held scanner 26.

The operational display 21 may be an liquid crystal touch panel display, for example.

The scanner 22 obtains information about items, such as their names and prices, by optically reading a bar code image attached to each item.

The card reader 23 reads information from credit cards, debit cards, prepaid cards etc.

The printer 24 ejects, from a receipt ejector 24a, a receipt on which transaction details are printed, including the names and prices of the registered items, the amount of money deposited, the amount of change, and the date and time.

The communication circuitry 25 is a communication interface that communicates with the change machine 30 and the server 100.

The hand-held scanner 26 is located on an upper portion of a device enclosure 11. The upper portion of the device enclosure 11 includes a holder 12 for holding the hand-held scanner 26 with the distal end of the hand-held scanner 26 hooked to it. The hand-held scanner 26 is held and operated by a customer to obtain information about items, such as their name and prices, by optically reading a bar code image attached to each item.

The scanner 22 and hand-held scanner 26 may read any information that can be used to identify items and may, for example, read information other than barcodes.

The POS register 20 also includes Pos control circuitry 27 to control the entire POS register 20. The Pos control circuitry 27 includes a central processing unit (CPU) (not shown), a read only memory (ROM) (not shown) as a storage area to store programs such as a basic input output system (BIOS), and a random access memory (RAM) (not shown) as a program execution area.

The POS register 20 also includes a memory 28 to store various programs, such as an operating system (OS) and applications, input data for various programs, output data from various programs, etc. For example, the memory 28 may be a storage device such as a hard disk drive (HDD) or a semiconductor memory.

The Pos control circuitry 27 includes purchased item registration circuitry 271, purchase amount calculation circuitry 272, settlement processing circuitry 273, and display control circuitry 274.

In response to the scanner 22 or hand-held scanner 26 obtaining information about items, such as their names and prices, by reading a bar code attached to each item, the purchased item registration circuitry 271 registers the items using the obtained information. Also, in response to obtaining information indicating that an item displayed on the operational display 21 has been selected, the purchased item registration circuitry 271 registers the name, price, etc. of the selected item.

The purchased item registration circuitry 271 uses measurements from a weight sensor (not shown) provided in the unregistered item table 71 and a weight sensor (not shown) provided in the registered item table 72 to determine whether a registered item has been placed on the registered item table 72. In response to the registered item being placed on the registered item table 72, the next item is permitted to be registered. In other words, a decrease in measurement from the weight sensor in the unregistered item table 71 that occurs before registering an item corresponds to the weight of the item. Thus, if the measurement from the weight sensor in the registered item table 72 increases by the weight of the item, the purchased item registration circuitry 271 determines that a registered item has been placed on the registered item table 72, and permits registration of the next item.

In response to the measurement from the weight sensor in the unregistered item table 71 indicating a value equivalent to the weight of the shopping basket 180, the purchased item registration circuitry 271 determines that the last registered item has been placed on the registered item table 72, and completes the registration of items.

In response to the purchased item registration circuitry 271 completing the registration of items, the purchase amount calculation circuitry 272 calculates the purchase amount by summing the prices of all registered items.

The settlement processing circuitry 273 completes the transaction by settling the purchase amount calculated by the purchase amount calculation circuitry 272 and issues a receipt. In other words, the settlement processing circuitry 273 causes the printer 24 to eject, from the receipt ejector 24a, a receipt on which the transaction details are printed, including the names and prices of the registered items, the amount of money deposited, the amount of change, and the date and time. The purchase amount may be settled by a payment card or by cash. If cash settlement is selected, the settlement processing circuitry 273 transmits the purchase amount to the change machine 30 and completes the settlement upon receiving a checkout completion notification from the change machine 30.

The display control circuitry 274 is now described.

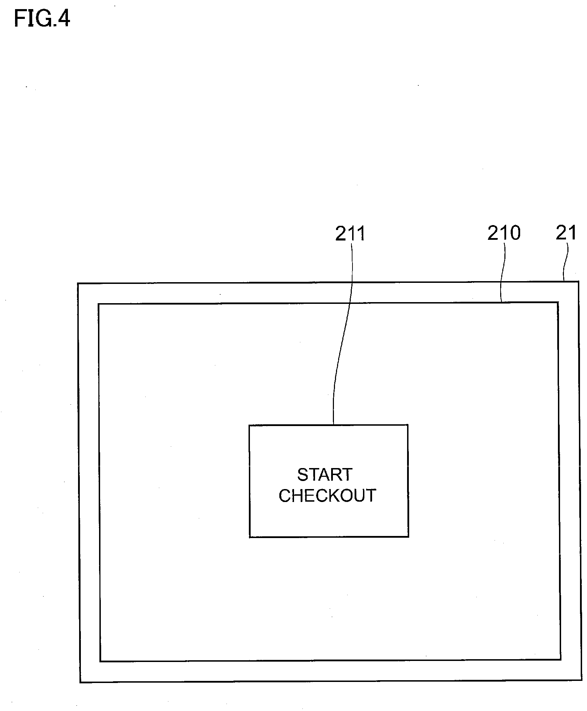

FIG. 4 illustrates an example checkout start screen 210 displayed on the operational display 21.

The display control circuitry 274 causes the operational display 21 to display a checkout start screen 210 during the stand-by period. The display control circuitry 274 causes a declaration button 211 to be displayed on the checkout start screen 210 for a customer to declare the start of checkout. In the example shown in FIG. 4, the declaration button 211 contains the words "start checkout".

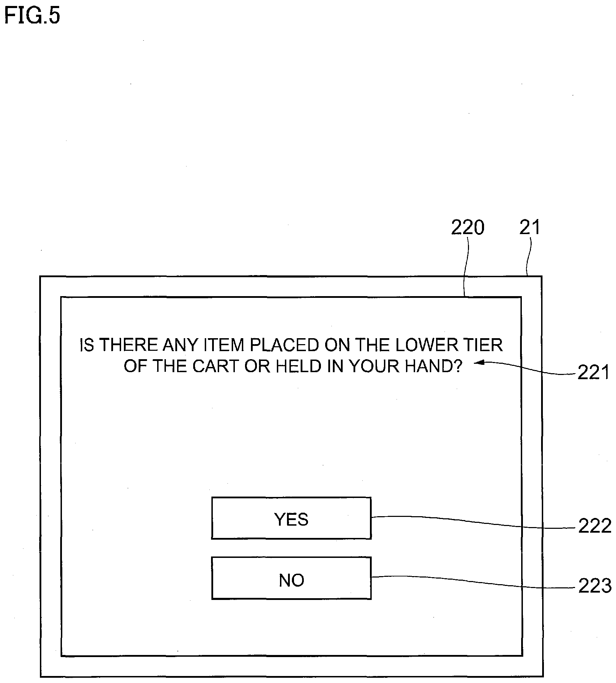

FIG. 5 illustrates an example selection screen 220 displayed on the operational display 21.

In response to the declaration button 211 being pressed, the display control circuitry 274 causes the operational display 21 to display a selection screen 220 for having the customer select whether there is any item placed on the lower tier 192 of the cart 190 or held in his/her hand. For example, in order to have the customer select whether there is any item placed on the lower tier 192 of the cart 190 or held in his/her hand, the display control circuitry 274 causes the operational display 21 to display text information 221 "Is there any item placed on the lower tier of the cart or held in your hand?" for prompting the customer's selection, along with a Yes button 222 containing text information "Yes" and a No button 223 containing text information "No" to be pressed by the customer as an answer.

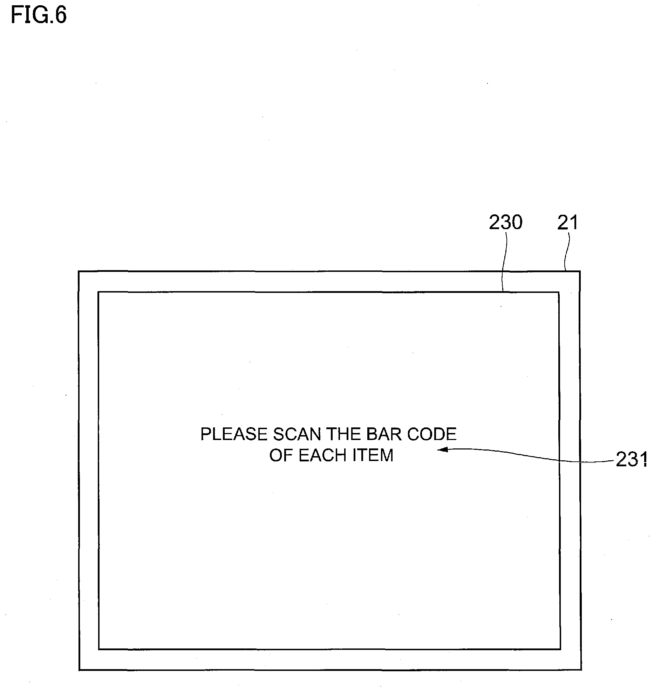

FIG. 6 illustrates an example request screen 230 displayed on the operational display 21.

In response to the Yes button 222 or No button 223 displayed on the selection screen 220 being pressed, the display control circuitry 274 causes the operational display 21 to present a request screen 230 for prompting the customer to register items to be purchased. For example, the display control circuitry 274 causes text information 231 "Please scan the bar code of each item" to be displayed on the request screen 230, as shown in FIG. 6.

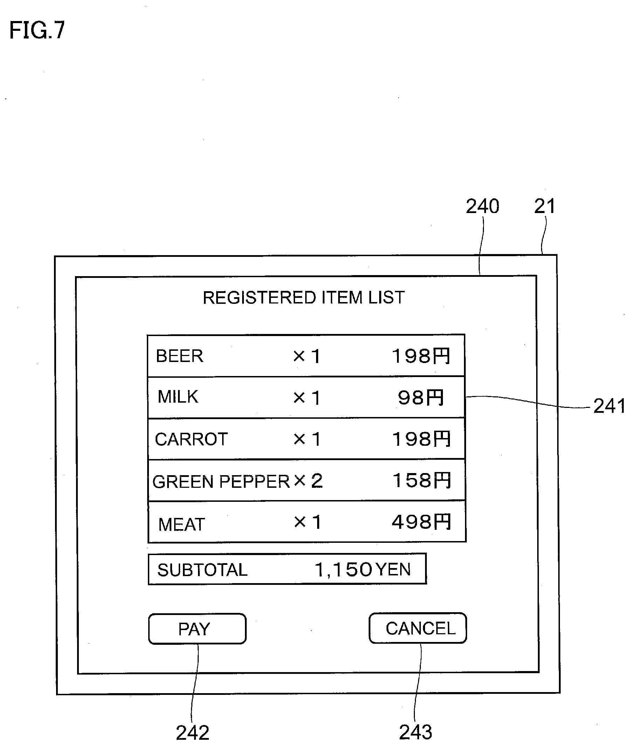

FIG. 7 illustrates an example item list screen 240 displayed on the operational display 21.

The purchased item registration circuitry 271 registers the items in response to the scanner 22 or hand-held scanner 26 reading the bar code attached to each item, and the display control circuitry 274 causes the operational display 21 to display a list 241 of the items registered by the purchased item registration circuitry 271 on an item list screen 240. The display control circuitry 274 also causes the purchase amount calculated by the purchase amount calculation circuitry 272 to be displayed on the item list screen 240.

The display control circuitry 274 also causes a payment button 242 to be displayed on the item list screen 240 for the customer to declare that he/she has completed registering the items and is ready to begin the settlement. The display control circuitry 274 also causes a cancel button 243 to be displayed on the item list screen 240 for the customer to declare that he or she wishes to cancel the registration of items. In the example shown in FIG. 7, the payment button 242 and the cancel button 243 contain the words "Pay" and "Cancel," respectively.

In addition, if the cash settlement is selected, the display control circuitry 274 causes the operational display 21 to display the amount of deposit money, the amount of change, etc.

### (Change Machine 30)

The change machine 30 includes communication circuitry 31, an operational display 32, and a memory 33, as shown in FIG. 3. The communication circuitry 31 is a communication interface that communicates with the POS register 20 and the server 100. The operational display 32 may be a liquid crystal touch panel display or the like. For example, the memory 33 may be a storage device such as an HDD or a semiconductor memory.

The change machine 30 also includes change machine control circuitry 34 to control the entire change machine 30. The change machine control circuitry 34 includes a CPU (not shown), a ROM (not shown), and a RAM (not shown). The change machine 30 also includes a banknote handling assembly 40 and a coin handling assembly 50. The change machine 30 also includes a banknote inlet 41 (see FIG. 2) for depositing banknotes, a banknote outlet 42 (see FIG. 2) for dispensing banknotes, a coin inlet 51 (see FIG. 2) for depositing coins, and a coin outlet 52 (see FIG. 2) for dispensing coins.

The change machine control circuitry 34 includes deposit processing circuitry 341 to process money deposit and dispensing processing circuitry 342 to process dispensing of money.

In response to receiving information indicating the purchase amount from the POS register 20, the deposit processing circuitry 341 permits deposit of money into the banknote handling assembly 40 and/or the coin handling assembly 50. The deposit processing circuitry 341 then obtains the number of banknotes/coins deposited from the banknote handling assembly 40 and/or the coin handling assembly 50 for each denomination and calculates the total amount of money deposited. If the total amount of money deposited exceeds the purchase amount, the deposit processing circuitry 341 calculates the difference between the total amount of money deposited and the purchase amount as change, and commands the dispensing processing circuitry 342 to dispense the change. On the other hand, if the total amount of money deposited matches the purchase amount or if the dispensing processing circuitry 342 has successfully completed dispensing the change, the deposit processing circuitry 341 transmits a checkout completion notification to the POS register 20.

In response to receiving the command from the deposit processing circuitry 341 to dispense the change, the dispensing processing circuitry 342 performs a dispensing process, including determining the denomination and number of banknotes/coins to be dispensed according to the amount of change and issuing the dispense command to the banknote handling assembly 40 and/or the coin handling assembly 50. Upon the change being successfully dispensed, the dispensing processing circuitry 342 notifies the deposit processing circuitry 341 of the completion of the dispensing process.

To register the items to be purchased put in the shopping basket 180, the customer places the shopping basket 180 containing the items on the unregistered item table 71 and repeats the following actions: remove each one of the items from the shopping basket 180, hold the barcode attached thereto over the scanner 22 for registration, and move the item onto the registered item table 72.

Meanwhile, if the customer wants to register an item placed on the lower tier 192 of the cart 190, he/she may, for example, use the hand-held scanner 26 to read the bar code attached thereto. Also, if the customer wants to register an item that he/she holds, he/she may, for example, use the hand-held scanner 26 to read the bar code attached thereto.

### (Server 100)

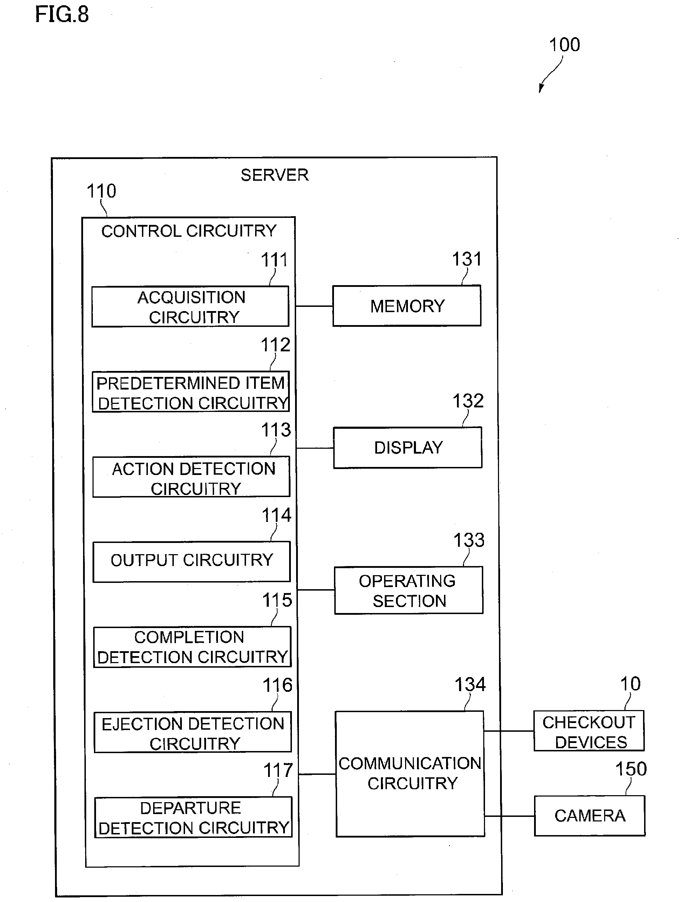

FIG. 8 illustrates an example schematic configuration of a server 100 according to the first embodiment.

The server 100 includes control circuitry 110 to control the entire server 100. The control circuitry 110 includes a CPU, a ROM, and a RAM.

The server 100 also includes a memory 131 to store various programs, such as an OS and applications, input data for various programs, output data from various programs etc. For example, the memory 131 may be a storage device such as an HDD or a semiconductor memory.

The server 100 includes a display 132 used to display operation reception screens and images, an operating section 133 for accepting user's input operations, and communication circuitry 134 used for communication with external devices.

For example, the display 132 may be a liquid crystal display or an organic EL display.

For example, the operating section 133 may be composed of a keyboard, a mouse, and/or a touch panel. If the operating section 133 is composed of a touch panel, the touch panel functions as both the operating section 133 and the display 132.

For example, the communication circuitry 134 may be a communication interface.

For example, the server 100 may be a computer that functions to exchange information with the clients, or the checkout devices 10. The server 100 may be a laptop PC, desktop PC, tablet PC, tablet terminal, portable information terminal (PDA), or multifunctional cell phone (so-called "smart phone").

### (Control Circuitry 110)

The control circuitry 110 includes acquisition circuitry 111 configured to obtain images taken by the camera 150 and information output from the checkout devices 10, predetermined item detection circuitry 112 configured to detect the presence of a predetermined item, and action detection circuitry 113 configured to detect that a person who is registering items (hereinafter referred to simply as a "registering person") has taken a predetermined item registration action. The control circuitry 110 further includes output circuitry 114 configured to output an alert if the presence of a predetermined item is detected by the predetermined item detection circuitry 112 but no predetermined item registration action for the predetermined item is detected by the action detection circuitry 113, because this indicates that the predetermined item may have not been registered. The control circuitry 110 further includes completion detection circuitry 115 configured to detect that the customer has finished registering items. The control circuitry 110 further includes ejection detection circuitry 116 configured to detect the ejection of a receipt from the receipt ejector 24a of the POS register 20. The control circuitry 110 further includes departure detection circuitry 117 configured to detect the departure of the customer from the checkout device 10.

The acquisition circuitry 111 obtains still images of the predetermined area A0, still images of faces etc. of customers in the predetermined area A0, and the like taken by the camera 150. Upon detecting a customer in the predetermined area A0, the acquisition circuitry 111 captures the motion of the customer as the motion of a human skeleton including multiple joints, and stores 3D coordinates of each joint in a 3D space, set in the predetermined area A0, in the memory 131 in time series as human body information. The human body information, which can be used to reproduce the customer's skeleton and motion, is stored in a text data format that records the 3D coordinates of each joint in time series. This can reduce the volume of data to be stored compared to storing moving images of the customer's motion.

For example, the predetermined item detection circuitry 112 may detect the presence of a predetermined item based on images taken by the camera 150, including images of customers waiting their turn in the waiting area A2 to enter the checkout area A1 and images of customers who have entered the checkout area A1 (hereinafter, these customers may be referred to as "waiting customers"). For example, the predetermined item detection circuitry 112 detects the presence of a predetermined item upon identifying that an object is placed on the lower tier 192 of the cart 190, based on images of the cart 190 pushed by a waiting customer, taken by the camera 150. Also, the predetermined item detection circuitry 112 detects the presence of a predetermined item upon identifying that a waiting customer is holding an item in his/her hand, based on images of the waiting customer taken by the camera 150.

The predetermined item detection circuitry 112 also detects the presence of a predetermined item if a customer reports the presence of the predetermined item via the POS register 20. For example, the predetermined item detection circuitry 112 detects the presence of a predetermined item if the Yes button 222 on the selection screen 220 is pressed.

The action detection circuitry 113 detects that a customer, or a registering person, has taken a predetermined item registration action. An example of the predetermined item registration action may be the customer reading the bar code attached to an item placed on the lower tier 192 of the cart 190 with the hand-held scanner 26. Another example of the predetermined item registration action may be the customer reading the bar code attached to an item that the customer holds in his/her hand with the hand-held scanner 26.

The action detection circuitry 113 detects the predetermined item registration action based on a skeletal recognition process on the registering person using the data stored in the memory 131. For example, if the action detection circuitry 113 wants to detect the predetermined item registration action described above, it may search the textual human body information based on the three-dimensional coordinates of each joint.

To enable the action detection circuitry 113 to detect the customer's motion or posture of, for example, reading the bar code attached to an item placed on the lower tier 192 of the cart 190 with the hand-held scanner 26, the acquisition circuitry 111 may preset a trigger condition to determine that the customer's motion or posture has satisfied a predetermined condition and may store moving images of a predetermined period of time capturing his/her motion or posture satisfying the trigger condition. Then, by specifying the trigger condition when searching for desired data from the stored data, the action detection circuitry 113 can retrieve and check the stored moving images that satisfy this trigger condition.

The output circuitry 114 outputs an alert if the presence of a predetermined item is detected by the predetermined item detection circuitry 112 but no predetermined item registration action for the predetermined item is detected by the action detection circuitry 113. For example, the alert may be in the form of predetermined text information displayed on the operational display 21 of the POS register 20, stating that the predetermined item has not been registered, in the form of predetermined text information displayed on the display of a terminal that a clerk standing in the checkout area A1 is looking at, stating that the predetermined item has not been registered, or in the form of the light 60 lighting up or blinking. Thus, if the presence of a predetermined item is detected by the predetermined item detection circuitry 112 but no predetermined item registration action for the predetermined item is detected by the action detection circuitry 113, the output circuitry 114 issues a command to the checkout device 10 or the terminal that the clerk standing in the checkout area A1 is looking at, commanding it to display the predetermined text information on the operational display 21 of the POS register 20 or the display of the terminal. Alternatively, if the presence of a predetermined item is detected by the predetermined item detection circuitry 112 but no predetermined item registration action for the predetermined item is detected by the action detection circuitry 113, the output circuitry 114 issues a command to the checkout device 10, commanding it to light up or blink the light 60.

If the payment button 242 on the item list screen 240 is pressed, the completion detection circuitry 115 detects that the customer has finished registering items.

If the images taken by the camera 150 include an image of a receipt ejected from the receipt ejector 24a, the ejection detection circuitry 116 detects that the receipt has been ejected.

The departure detection circuitry 117 detects the departure of the customer, using images taken by the camera 150. For example, the departure detection circuitry 117 detects that the customer has left the checkout device 10 if he/she has moved from within a predetermined area around the checkout device 10 to outside the predetermined area. Alternatively, the departure detection circuitry 117 detects that the customer has left the checkout area A1 when he/she has moved from within the checkout area A1 to outside the checkout area A1.

### [Monitoring Process]

A monitoring process performed by the control circuitry 110 is now described in connection with a flowchart.

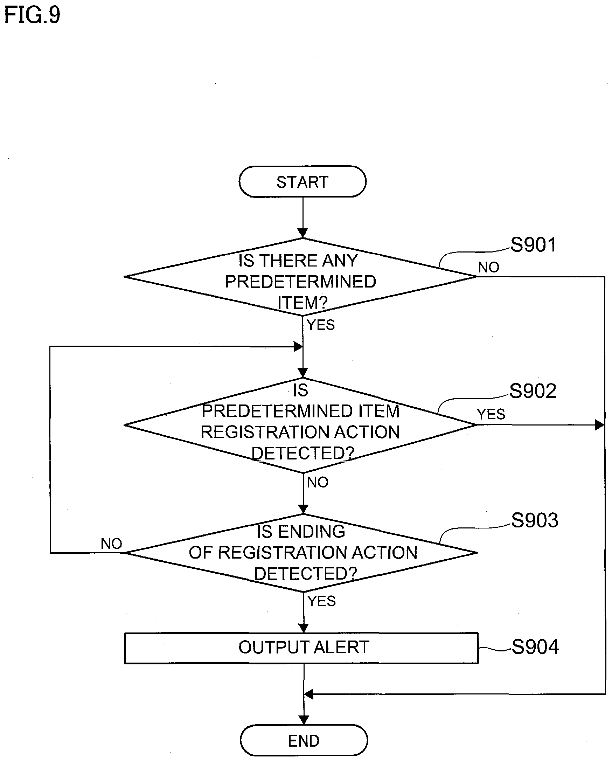

FIG. 9 is a flowchart illustrating an example monitoring process performed by the control circuitry 110. The control circuitry 110 repeats the monitoring process at certain preset time intervals (e.g., at 1 millisecond intervals).

The control circuitry 110 determines whether there is any predetermined item (S901). The step S901 is the process of determining whether the predetermined item detection circuitry 112 detects any predetermined item in the above-described manner. If there is no predetermined item (NO in S901), the control circuitry 110 ends the monitoring process.

On the other hand, if there is a predetermined item (YES in S901), the control circuitry 110 determines whether a predetermined item registration action is detected (S902). The step S902 is the process of determining whether the action detection circuitry 113 detects any of the predetermined item registration actions described above. If the predetermined item registration action is detected (YES in S902), the control circuitry 110 ends the monitoring process.

On the other hand, if no predetermined item registration action is detected (NO in S902), the control circuitry 110 determines whether the ending of the registration action is detected (S903). For example, the step S903 is the process of the completion detection circuitry 115 determining whether the payment button 242 on the item list screen 240 is pressed. If the ending of the registration action is not detected (NO in S903), the control circuitry 110 performs step S902 and onward.

On the other hand, if the ending of the registration action is detected (YES in S903), the control circuitry 110 outputs an alert (S904). The step S904 is performed by the output circuitry 114. Thus, the alert is output if no predetermined item registration action for the predetermined item is detected by the action detection circuitry 113 despite the presence of the predetermined item and the ending of the registration action.

As described above, the system 1 includes the predetermined item detection circuitry 112 (an example of the first detector) configured to detect the presence of a predetermined item other than items put in the shopping basket 180 (an example of the container) provided in a store, and the action detection circuitry 113 (an example of the second detector) configured to detect a predetermined item registration action, using images taken of item registration work by a registering person. The system 1 further includes the output circuitry 114 configured to output an alert if the presence of the predetermined item is detected by the predetermined item detection circuitry 112 but no predetermined item registration action for the predetermined item is detected by the action detection circuitry 113.

If the presence of the predetermined item is detected by the predetermined item detection circuitry 112 but no predetermined item registration action for the predetermined item is detected by the action detection circuitry 113, the customer is likely to be failing to register the predetermined item. On that occasion, the system 1 configured as above can output an alert, which can reliably prevent the customer from failing to register the predetermined item. For example, in an implementation where the alert is in the form of predetermined text information displayed on the operational display 21 of the POS register 20 stating that the item has not been registered, the customer himself/herself can, on looking at the text information displayed on the operational display 21, notice that he/she is failing to register the item and thus can register the item. Also, in such an implementation where the alert is in the form of predetermined text information displayed on the operational display 21 of the POS register 20 stating that the item has not been registered, for example, a clerk standing in the checkout area A1 can, on looking at the text information displayed on the operational display 21, notice that the customer is failing to register the item and can prompt him/her to register the item. In another implementation where the alert is in the form of predetermined text information, stating that the item has not been registered, displayed on the display of a terminal that a clerk standing in the checkout area A1 is looking at, the clerk can, on looking at the text information displayed on the display of the terminal, notice that the customer is failing to register the item and can prompt him/her to register the item. In still another implementation where the alert is in the form of the light 60 lighting up or blinking, for example, a clerk standing in the checkout area A1 can notice that the customer is failing to register the item and can prompt him/her to register the item.

The predetermined item detection circuitry 112 detects the presence of a predetermined item, using images taken of a registering person. For example, the predetermined item detection circuitry 112 detects the presence of a predetermined item upon identifying, based on images of a waiting customer taken by the camera 150, that the waiting customer is holding an item in his/her hand or an object is placed on the lower tier 192 of the cart 190. Alternatively, the predetermined item detection circuitry 112 detects the presence of a predetermined item if a registering person indicates the presence of the predetermined item (e.g., if the Yes button 222 on the on the selection screen 220 is pressed). These allow the predetermined item detection circuitry 112 to reliably detect the presence of a predetermined item.

The action detection circuitry 113 detects a predetermined item registration action based on a skeletal recognition process on the registering person, as described above. This allows the action detection circuitry 113 to reliably detect a predetermined item registration action.

The output circuitry 114 outputs an alert if the registering person reports that he/she has finished the item registration work. For example, the output circuitry 114 outputs an alert in response to the completion detection circuitry 115 detecting the pressing of the payment button 242 on the item list screen 240. This allows the customer, or the registering person, to more quickly notice that he/she is failing to register a predetermined item.

Alternatively, the output circuitry 114 outputs an alert in response to the departure detection circuitry 117 detecting that the customer has left the checkout device 10 or the checkout area A1. This can prevent the customer from leaving the store despite having not finished his/her item registration.

While FIG. 1 illustrates one camera 150, there may be multiple cameras 150 for capturing the predetermined area A0. The checkout device 10 may include a camera for capturing a predetermined area around the checkout device 10.

The item registration monitoring method performed by the system 1 includes: detecting the presence of a predetermined item other than items put in the shopping basket 180 provided in a store; detecting a predetermined item registration action, using images taken of item registration work by a registering person; and outputting an alert if the presence of the predetermined item is detected but no predetermined item registration action for the predetermined item is detected. This item registration monitoring method can reliably prevent customers from failing to register items.

The processes performed by the server 100 and the checkout devices 10 described above may be implemented through interaction between software and hardware resources. In this case, the CPU of the control circuitry (e.g., control circuitry 110) of each device (e.g., server 100) executes a program for implementing the functions of the device, thereby implementing the functions. For example, a non-transitory computer-readable recording medium storing the program is provided to each device (e.g., server 100), and the CPU of the device (e.g., server 100) reads the program stored in the recording medium. Alternatively, the CPU of the device (e.g., server 100) downloads the program via the network 8. In these cases, the program itself read from the recording medium or downloaded via the network 8 implements the functions of the above embodiment, and thus the program itself as well as the recording medium storing it constitute aspects of the present disclosure.

The program for implementing the functions of the server 100 causes a computer to implement: a first detection function of detecting the presence of a predetermined item other than items put in the shopping basket 180 provided in a store; a second detection function of detecting a predetermined item registration action, using images taken of item registration work by a registering person; and an output function of outputting an alert if the presence of the predetermined item is detected by the first detection function but no predetermined item registration action for the predetermined item is detected by the second detection function.

Example recording media for supplying such a program include flexible disks, CD-ROMs, DVD-ROMs, hard disks, optical disks, magneto-optical disks, CD-Rs, magnetic tapes, non-volatile memory cards, and ROMs.

### Second Embodiment

A distinction of the system according to the second embodiment from the system 1 according to the first embodiment relates to a monitoring process performed by the control circuitry 110 of the server 100. Components in the second embodiment with identical functions to those in the first embodiment are referenced with the same reference numerals, and detailed descriptions thereof are omitted.

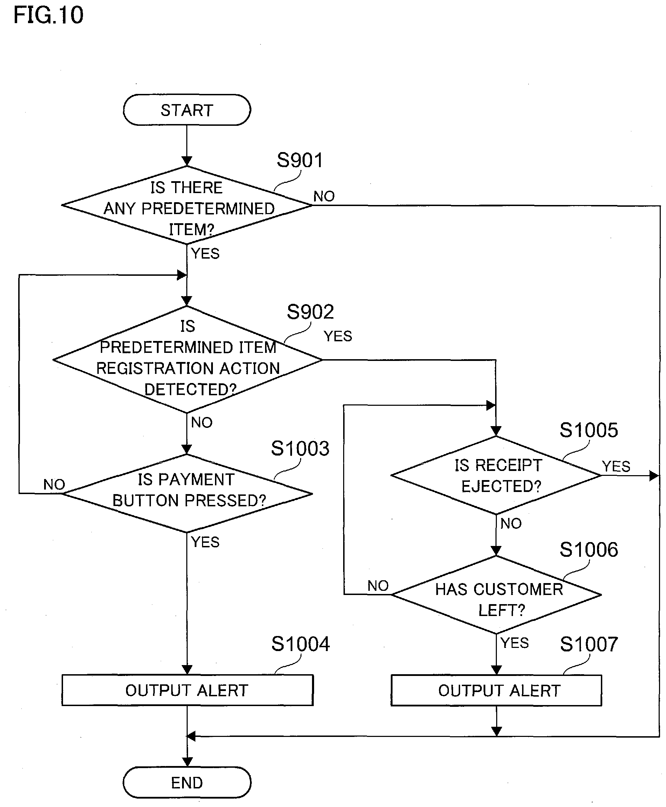

FIG. 10 is a flowchart illustrating a monitoring process performed by the control circuitry 110 according to the second embodiment. In the flowchart of FIG. 10, identical steps to those in the flowchart of FIG. 9 are referenced with the same reference numerals, and detailed descriptions thereof are omitted.

The control circuitry 110 determines whether there is any predetermined item (S901). If there is no predetermined item (NO in S901), the control circuitry 110 ends the monitoring process. On the other hand, if there is a predetermined item (YES in S901), the control circuitry 110 determines whether a predetermined item registration action is detected (S902).

If no predetermined item registration action is detected (NO in S902), the control circuitry 110 determines whether the payment button 242 on the item list screen 240 is pressed (S1003). The step S1003 is the process of the completion detection circuitry 115 determining whether the payment button 242 on the item list screen 240 is pressed. If the payment button 242 is not pressed (No in S1003), the control circuitry 110 performs step S902 and onward.

On the other hand, if the payment button 242 is pressed (YES in S1003), the control circuitry 110 outputs an alert (S1004). The step S1004 is the process of displaying predetermined text information on the operational display 21 of the POS register 20 stating that the item registration has not been completed.

On the other hand, if the predetermined item registration action is detected (YES in S902), the control circuitry 110 determines whether a receipt is ejected (S1005). The step S1005 is the process of determining whether the ejection detection circuitry 116 detects the ejection of a receipt from the receipt ejector 24a. If a receipt is ejected (YES in S1005), the control circuitry 110 ends the monitoring process.

On the other hand, if no receipt is ejected (NO in S1005), the control circuitry 110 determines whether the customer has left the checkout device 10 or the checkout area A1 (S1006). The step S1006 is the process of determining whether the departure detection circuitry 117 detects the departure of the customer from the checkout device 10 or the checkout area A1. If the customer has not left the checkout device 10 or the checkout area A1 (NO in S1006), the control circuitry 110 performs step S1005 and onward.

On the other hand, if the customer has left the checkout device 10 or the checkout area A1 (YES in S1006), the control circuitry 110 outputs an alert (S1007). The step S1007 is performed by the output circuitry 114. This step includes, for example, displaying predetermined text information on the operational display 21 of the POS register 20 stating that the item registration has not been completed, displaying predetermined text information on the display of a terminal that a clerk standing in the checkout area A1 is looking at, stating that the item registration has not been completed, or lighting up or blinking the light 60.

As described above, the system according to the second embodiment includes the ejection detection circuitry 116 (an example of the third detector) configured to detect the ejection of a receipt, and the departure detection circuitry 117 (an example of the fourth detector) configured to detect the departure of a registering person from the checkout device 10 that processes the checkout. If the ejection detection circuitry 116 does not detect the ejection of a receipt by the time when the departure detection circuitry 117 detects the departure of the registering person, the output circuitry 114 outputs an alert. This can prevent the customer from leaving the store despite a receipt having not been ejected, or in other words, despite having not completed his/her checkout process.

In order to prevent the customer from leaving the store despite having not completed the checkout process, any of the following matters may be determined instead of determining the ejection of a receipt in S1005.

For example, in S1005, the control circuitry 110 may determine whether the payment button 242 on the item list screen 240 is pressed. If the payment button 242 is pressed, the control circuitry 110 may end the monitoring process. On the other hand, if the payment button 242 is not pressed, the control circuitry 110 may then determine whether the customer has left (S1006). This can prevent the customer from leaving the store despite having not completed his/her checkout process.

Alternatively, the system according to the second embodiment may include a reader located at the exit of the checkout area A1 to read the image of a bar code attached to the receipt, and the control circuitry 110 may determine in step S1005 whether the reader has read the image of the bar code attached to the receipt (in other words, whether the customer has held the receipt over the reader). If the reader has read the bar code, the control circuitry 110 may end the monitoring process. On the other hand, if the reader has not read the bar code, the control circuitry 110 may then determine whether the customer has left (S1006). This can prevent the customer from leaving the store without the receipt being held over the reader at the exit of the checkout area A1.

In the system 1 according to the first embodiment and the system according to the second embodiment described above, the control circuitry 110 may store the historical data in the memory 131, instead of the output circuitry 114 outputting an alert. For example, in response to the predetermined item detection circuitry 112 detecting the presence of a predetermined item based on images taken by the camera 150, the control circuitry 110 may recognize the face of the waiting customer carrying the predetermined item and also recognize which checkout device 10 was used by this waiting customer for item registration. And if the presence of the predetermined item was detected by the predetermined item detection circuitry 112 but no predetermined item registration action for the predetermined item was detected by the action detection circuitry 113, the control circuitry 110 may store the image of the waiting customer who was carrying the predetermined item and the number of the relevant checkout device 10 in the memory 131 in association with each other, along with information indicating that the predetermined item was not registered. This allows, for example, a clerk to know the face of the customer who failed to register the item by checking the historical data stored in the memory 131. Thus, when the customer who failed to register the item comes to the store at a later date, the clerk can talk to the customer, thereby preventing the customer who failed to register the item from failing to do so again.

### Third Embodiment

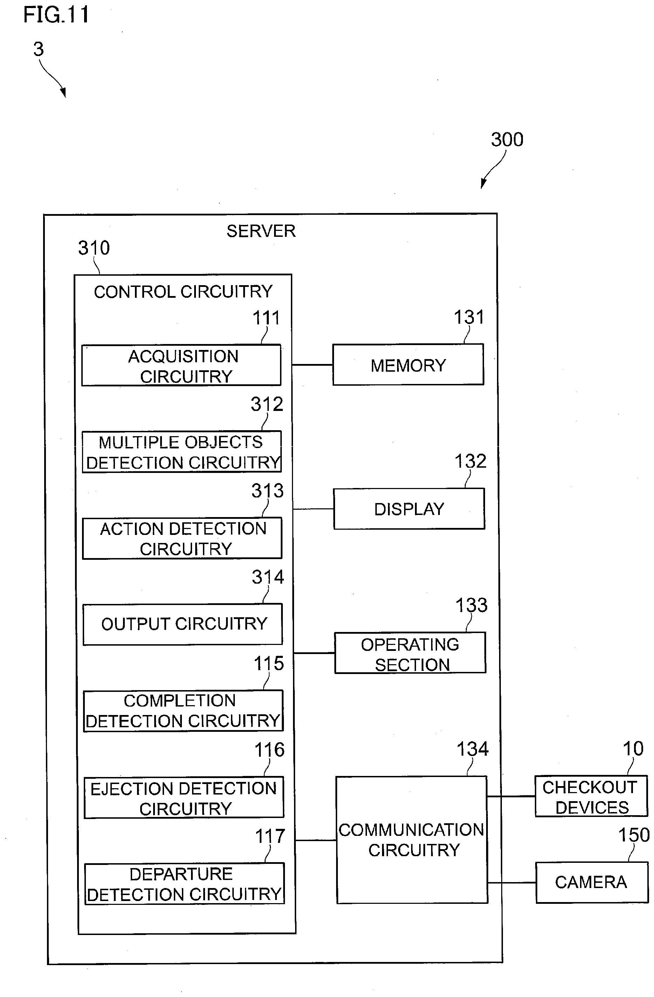

FIG. 11 illustrates an example schematic configuration of a system 3 according to a third embodiment.

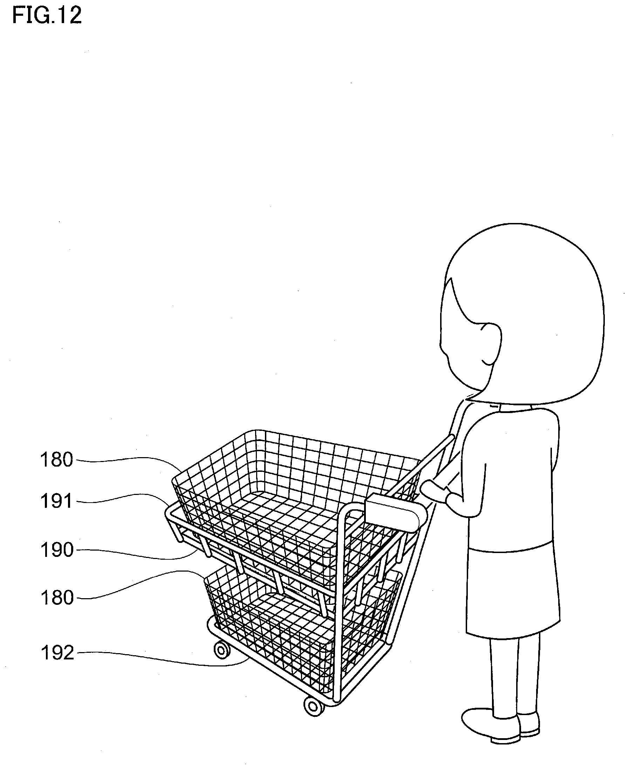

FIG. 12 schematically illustrates an example situation where a waiting customer is pushing a cart 190.

A distinction of the system 3 according of the third embodiment from the system 1 according to the first embodiment and the system according to the second embodiment relates to conditions under which output circuitry 314, which corresponds to the output circuitry 114, outputs an alert. Components in the third embodiment with identical functions to those in the first and second embodiments are referenced with the same reference numerals, and detailed descriptions thereof are omitted.

The system 3 includes a server 300, which corresponds to the server 100. The server 300 includes control circuitry 310, which corresponds to the control circuitry 110.

The control circuitry 310 includes the acquisition circuitry 111, multiple objects detection circuitry 312 configured to detect the presence of multiple shopping baskets 180, and action detection circuitry 313 configured to detect that a registering person has taken a predetermined item registration action. The control circuitry 310 further includes output circuitry 314 configured to output an alert if the presence of multiple shopping baskets 180 is detected by the multiple objects detection circuitry 312 but no predetermined item registration action for the multiple shopping baskets 180 is detected by the action detection circuitry 313, because this indicates that some items put in the multiple shopping baskets 180 may have not been registered. The control circuitry 310 also includes the completion detection circuitry 115, the ejection detection circuitry 116, and the departure detection circuitry 117.

For example, the multiple objects detection circuitry 312 may detect the presence of multiple shopping baskets 180 based on images of waiting customers or carts 190 being pushed by waiting customers, taken by the camera 150. For example, upon identifying, based on images taken by the camera 150, that a cart 190 being pushed by a waiting customer carries shopping baskets 180 both on upper and lower tiers 191, 192 of the cart 190, the multiple objects detection circuitry 312 detects that there are multiple shopping baskets 180.

The action detection circuitry 313 detects that a customer, or a registering person, has taken a predetermined item registration action. For example, the predetermined item registration action may be the customer moving both shopping baskets 180 from the upper and lower tiers 191, 192 of the cart 190 onto the unregistered item table 71. The timing of moving multiple shopping baskets 180 onto the unregistered item table 71 does not have to be simultaneous; for example, the customer may first register the items put in a shopping basket 180 placed on the upper tier 191 and then move another shopping basket 180 from the lower tier 192 onto the unregistered item table 71.

The action detection circuitry 313 detects the predetermined item registration action based on a skeletal recognition process on the registering person using the data stored in the memory 131.

To enable the action detection circuitry 313 to detect the customer's motion or posture of, for example, moving the shopping basket 180 from the upper tier 191 or lower tier 192 of the cart 190 onto the unregistered item table 71, the acquisition circuitry 111 may preset a trigger condition to determine that the customer's motion or posture has satisfied a predetermined condition and may store moving images of a predetermined period of time capturing his/her motion or posture satisfying the trigger condition. Then, by specifying the trigger condition when searching for desired data from the stored data, the action detection circuitry 313 can retrieve and check the stored moving images that satisfy this trigger condition.

The output circuitry 314 outputs an alert if the presence of multiple shopping baskets 180 is detected by the multiple objects detection circuitry 312 but no predetermined item registration action for the multiple shopping baskets 180 is detected by the action detection circuitry 313.

### [Monitoring Process]

A monitoring process performed by the control circuitry 310 is now described in connection with a flowchart.

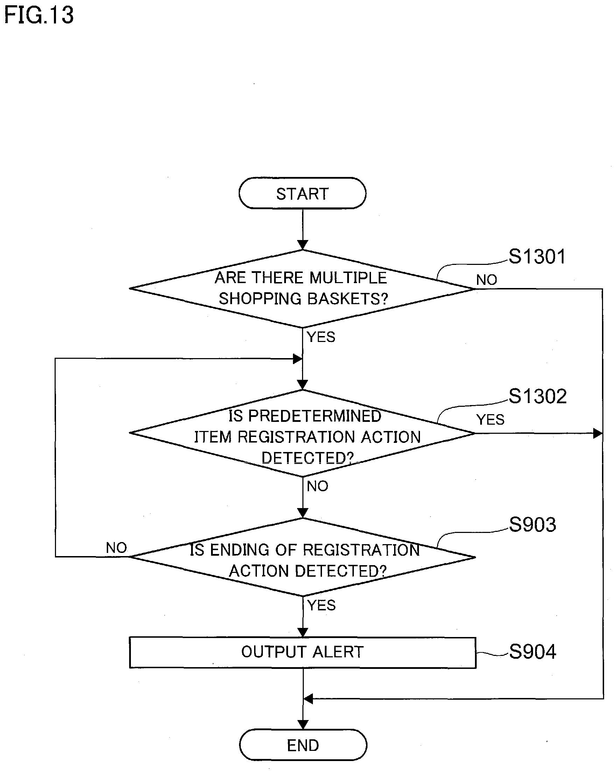

FIG. 13 is a flowchart illustrating an example monitoring process performed by the control circuitry 310. In the flowchart of FIG. 13, identical steps to those in the flowchart of FIG. 9 are referenced with the same reference numerals, and detailed descriptions thereof are omitted. The control circuitry 310 repeats the monitoring process at certain preset time intervals (e.g., at 1 millisecond intervals).

The control circuitry 310 determines whether there are multiple shopping baskets 180 (S1301). The step S1301 is the process of determining whether the multiple objects detection circuitry 312 detects the presence of multiple shopping baskets 180 in the above-described manner. If there are no multiple shopping baskets 180 (NO in S1301), the control circuitry 310 ends the monitoring process.

On the other hand, if there are multiple shopping baskets 180 (YES in S1301), the control circuitry 310 determines whether a predetermined item registration action is detected (S1302). The step S1302 is the process of determining whether the action detection circuitry 313 detects any of the predetermined item registration actions described above. If the predetermined item registration action is detected (YES in S1302), the control circuitry 310 ends the monitoring process.

On the other hand, if no predetermined item registration action is detected (NO in S1302), the control circuitry 310 determines whether the ending of the registration action is detected (S903). If the ending of the registration action is not detected (NO in S903), the control circuitry 310 performs step S1302 and onward. On the other hand, if the ending of the registration action is detected (YES in S903), the control circuitry 310 outputs an alert (S904). The step S904 is performed by the output circuitry 314. Thus, the alert is output if no predetermined item registration action for the multiple shopping baskets 180 is detected by the action detection circuitry 313 despite the presence of the multiple shopping baskets 180 and the ending of the registration action.

As described above, the system 3 includes the multiple objects detection circuitry 312 (an example of the first detector) configured to detect the presence of multiple shopping baskets 180 provided in a store, and the action detection circuitry 313 (an example of the second detector) configured to detect a predetermined item registration action, using images taken of item registration work by a registering person. The system 3 further includes the output circuitry 314 configured to output an alert if the presence of the multiple shopping baskets 180 is detected by the multiple objects detection circuitry 312 but no predetermined item registration action for the multiple shopping baskets 180 is detected by the action detection circuitry 313.

If the presence of multiple shopping baskets 180 is detected by the predetermined item detection circuitry 312 but no predetermined item registration action for the multiple shopping baskets 180 is detected by the action detection circuitry 313, the customer is likely to be failing to register a predetermined item. On that occasion, the system 3 configured as above can output an alert, which can reliably prevent the customer from failing to register the item.

As in the monitoring process according to the second embodiment described in connection with the flowchart of FIG. 10, the control circuitry 310 may output an alert if the ejection detection circuitry 116 does not detect the ejection of a receipt by the time when the departure detection circuitry 117 detects the departure of the registering person. This can prevent the customer from leaving the store despite a receipt having not been ejected, or in other words, despite having not completed his/her checkout process.

The item registration monitoring method performed by the system 3 includes: detecting the presence of multiple shopping baskets 180 provided in a store; detecting a predetermined item registration action, using images taken of item registration work by a registering person; and outputting an alert if the presence of multiple shopping baskets 180 is detected but no predetermined item registration action for the multiple shopping baskets 180 is detected. This item registration monitoring method can reliably prevent customers from failing to register items.

The program for implementing the functions of the server 300 causes a computer to implement: a first detection function of detecting the presence of multiple shopping baskets 180 provided in a store; a second detection function of detecting a predetermined item registration action, using images taken of item registration work by a registering person; and an output function of outputting an alert if the presence of multiple shopping baskets 180 is detected by the first detection function but no predetermined item registration action for the multiple shopping baskets 180 is detected by the second detection function.

### Fourth Embodiment

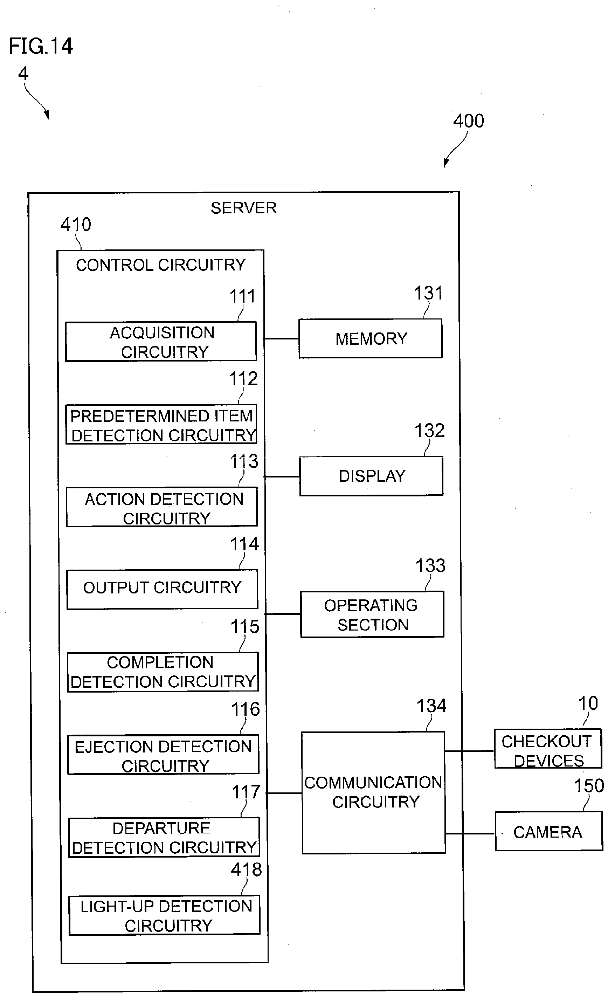

FIG. 14 illustrates an example schematic configuration of a system 4 according to a fourth embodiment.

A distinction of the system 4 according to the fourth embodiment from the system 1 according to the first embodiment and the system according to the second embodiment is that the system 4 confirms the registration of an item by recognizing, based on images taken by the camera 150, that an LED of the scanner 22 or hand-held scanner 26 has lit up as a result of the scanner 22 or hand-held scanner 26 reading the image of a bar code attached to the item. Components in the fourth embodiment with identical functions to those in the first and second embodiments are referenced with the same reference numerals, and detailed descriptions thereof are omitted.

The system 4 according to the fourth embodiment includes a server 400, which corresponds to the server 100, including control circuitry 410. The control circuitry 410 includes light-up detection circuitry 418 configured to detect the lighting up of the LED of the scanner 22 or hand-held scanner 26.

The light-up detection circuitry 418 detects the lighting up of the LED of the scanner 22 or hand-held scanner 26 based on images taken by the camera 150.

In addition to outputting an alert if the presence of a predetermined item is detected by the predetermined item detection circuitry 112 but no item registration action for the predetermined item is detected by the action detection circuitry 113, the output circuitry 114 according to the fourth embodiment can output an alert in the following case. That is, the output circuitry 114 according to the fourth embodiment outputs an alert if the presence of a predetermined item is detected by the predetermined item detection circuitry 112 and a predetermined item registration action for the predetermined item is detected by the action detection circuitry 113 but the light-up detection circuitry 418 does not detect the lighting up of the LED of the scanner 22 or hand-held scanner 26 in conjunction with the item registration action for the predetermined item.

If, despite the fact that the predetermined item detection circuitry 112 has detected the presence of a predetermined item and the action detection circuitry 113 has detected, for example, the customer's action of reading the bar code attached to the predetermined item with the hand-held scanner 26, the lighting up of the LED of the hand-held scanner 26 is not detected, it is likely that the customer is pretending to have read the bar code attached to the predetermined item with the hand-held scanner 26. The system 4, which outputs an alert if the customer is likely to have made such a deceptive act, can reliably prevent him/her from failing to register the item.

### Fifth Embodiment

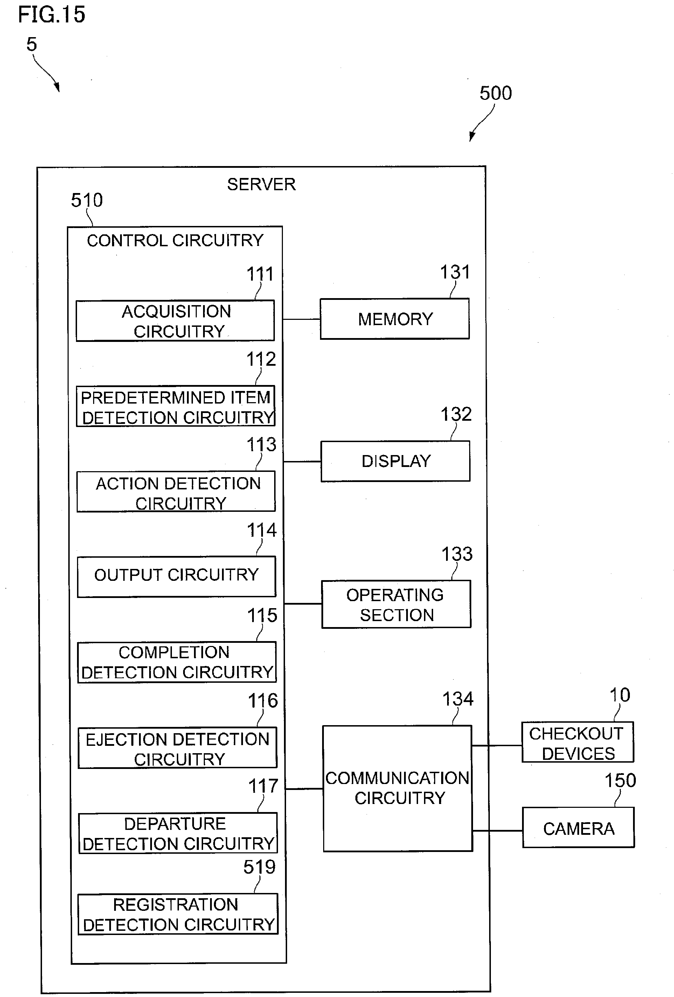

FIG. 15 illustrates an example schematic configuration of a system 5 according to a fifth embodiment.

A distinction of the system 5 according to the fifth embodiment from the system 1 according to the first embodiment and the system according to the second embodiment is that the system 5 confirms the registration of an item by recognizing, based on images taken by the camera 150, that a new item has been added to the list 241 on the item list screen 240 displayed on the operational display 21 of the POS register 20 of the checkout device 10 as a result of the scanner 22 or hand-held scanner 26 reading the image of a bar code attached to the item. Components in the fifth embodiment with identical functions to those in the first and second embodiments are referenced with the same reference numerals, and detailed descriptions thereof are omitted.

The system 5 according to the fifth embodiment includes a server 500, which corresponds to the server 100, including control circuitry 510. The control circuitry 510 includes registration detection circuitry 519 configured to detect the addition of a new item to the list 241 on the item list screen 240 as a result of the scanner 22 or hand-held scanner 26 reading the image of a bar code attached to the item.

Based on images of the operational display 21 of the checkout device 10 taken by the camera 150, the registration detection circuitry 519 detects the addition of a new item to the list 241 on the item list screen 240 displayed on the operational display 21 of the checkout device 10 as a result of the scanner 22 or hand-held scanner 26 reading the image of a bar code attached to the item.

In addition to outputting an alert if the presence of a predetermined item is detected by the predetermined item detection circuitry 112 but no predetermined item registration action for the predetermined item is detected by the action detection circuitry 113, the output circuitry 114 according to the fifth embodiment can output an alert in the following case. That is, the output circuitry 114 according to the fifth embodiment outputs an alert if the presence of a predetermined item is detected by the predetermined item detection circuitry 112 and a predetermined item registration action for the predetermined item is detected by the action detection circuitry 113 but no new item is added to the list 241 on the item list screen 240, whereas such addition should occur as a result of the scanner 22 or hand-held scanner 26 reading the image of a bar code attached to the predetermined item in conjunction with the item registration action for the predetermined item.

As described above, the system 5 includes the registration detection circuitry 519 (an example of the first detector) configured to detect a predetermined operation of the POS register 20 (e.g., addition of a new item to the list 241 on the item list screen 240 displayed on the operational display 21), based on images taken of the POS register 20 (an example of the item registration terminal). The system 5 further includes the action detection circuitry 113 (an example of the second detector) configured to detect a predetermined item registration action (e.g., the action of reading a bar code with the hand-held scanner 26), using images taken of item registration work by a registering person (images taken by the camera 150). The system 5 further includes the output circuitry 114 configured to output an alert if no predetermined operation is detected by the registration detection circuitry 519 in conjunction with the predetermined item registration action detected by the action detection circuitry 113.

If, despite the fact that the predetermined item detection circuitry 112 has detected the presence of a predetermined item and the action detection circuitry 113 has detected a predetermined item registration action for the predetermined item, no predetermined operation of the POS register 20 is detected, the system 5 configured as described above has the output circuitry 114 output an alert. If, despite the fact that the predetermined item detection circuitry 112 has detected the presence of a predetermined item and the action detection circuitry 113 has detected, for example, the customer's action of reading the bar code attached to the predetermined item with the hand-held scanner 26, no predetermined operation of the POS register 20 is detected, it is likely that the customer is pretending to have read the bar code attached to the predetermined item with the hand-held scanner 26. The system 5, which outputs an alert if the customer is likely to have made such a deceptive act, can reliably prevent him/her from failing to register the item.

The registration detection circuitry 519 does not necessarily use the images taken by the camera 150 to detect the addition of a new item to the list 241 on the item list screen 240 displayed on the operational display 21 as a result of the hand-held scanner 26 reading the image of a bar code attached to the item. For example, the system 5 may include a dedicated camera for taking images of the operational display 21 of the POS register 20, separately from the camera 150, and the registration detection circuitry 519 may detect the addition of a new item to the list 241 on the item list screen 240 based on images taken by the dedicated camera.

Instead of confirming the registration of an item by recognizing that a new item has been added to the list 241 on the item list screen 240 displayed on the operational display 21 of the POS register 20, the system 5 may confirm the registration of an item by having sound recognition circuitry recognize that a sound (e.g., a "beep" indicating successful registration) has been output from the POS register 20 as a result of the scanner 22 and hand-held scanner 26 reading the image of a bar code attached to the item. Such a sound recognition approach can prevent customers from making a deceptive act as well.

The foregoing description of the exemplary embodiment of the present disclosure has been provided for the purposes of illustration and description. It is not intended to be exhaustive or to limit the disclosure to the precise forms disclosed. Obviously, many modifications and variations will be apparent to practitioners skilled in the art without departing from the scope and spirit of the present disclosure. The exemplary embodiment was chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. A system comprising:
a first detector configured to detect a presence of a predetermined item other than items that are put in a container provided in a store;
a second detector configured to detect a predetermined item registration action, using an image taken of item registration work by a registering person who is registering items; and
an outputter configured to output an alert if the presence of the predetermined item is detected by the first detector but the predetermined item registration action for the predetermined item is not detected by the second detector.

2. The system according to claim 1, wherein the first detector is configured to detect the presence of the predetermined item using an image taken of the registering person.

3. The system according to claim 1, wherein the first detector is configured to detect the presence of the predetermined item if the presence of the predetermined item is indicated by the registering person.

4. The system according to claim 1, wherein the predetermined item is an item placed on a lower tier of a cart carrying the container.

5. The system according to claim 1, wherein the predetermined item is an item held by the registering person.

6. The system according to claim 1, wherein the second detector is configured to detect the predetermined item registration action based on a skeletal recognition process on the registering person.

7. The system according to claim 1, wherein the outputter is configured to output the alert in response to the registering person declaring that the registering person has completed the item registration work.

8. The system according to claim 1, further comprising:
a third detector configured to detect ejection of a receipt; and
a fourth detector configured to detect departure of the registering person from a checkout device that processes checkout, wherein
the outputter is configured to output the alert if the ejection of the receipt is not detected by the third detector by the time when the fourth detector detects the departure of the registering person.

9. A system comprising:
a first detector configured to detect a presence of a plurality of containers provided in a store;
a second detector configured to detect a predetermined item registration action, using an image taken of item registration work by a registering person who is registering items; and
an outputter configured to output an alert if the presence of the plurality of containers is detected by the first detector but the predetermined item registration action for the plurality of containers is not detected by the second detector.

10. An item registration monitoring method comprising:
detecting a presence of a predetermined item other than items that are put in a container provided in a store;
detecting a predetermined item registration action, using an image taken of item registration work by a registering person who is registering items; and
outputting an alert if the presence of the predetermined item is detected but the predetermined item registration action for the predetermined item is not detected.
